# EUROPEAN PATENT SPECIFICATION

(11) **EP 3 131 002 B1**
(45) Date of publication and mention of the grant of the patent: **24.03.2021**
(21) Application number: 16157527.9
(22) Date of filing: 26.02.2016
(51) Int. Cl.: G06F 3/12, H04N 1/44, H04W 4/02, H04W 4/021

(54) **INFORMATION PROCESSING APPARATUS, INFORMATION PROCESSING PROGRAM, AND INFORMATION PROCESSING METHOD**
INFORMATIONSVERARBEITUNGSVORRICHTUNG, INFORMATIONSVERARBEITUNGSPROGRAMM UND INFORMATIONSVERARBEITUNGSVERFAHREN
APPAREIL DE TRAITEMENT D'INFORMATIONS, PROCÉDÉ DE TRAITEMENT D'INFORMATIONS ET PROGRAMME DE TRAITEMENT D'INFORMATIONS

(30) Priority: 10.08.2015 JP 2015157941
(43) Date of publication of application: 15.02.2017
(73) Proprietor: Fuji Xerox Co., Ltd., Minato-ku, Tokyo (JP)
(72) Inventor: MIURA, Toru, Yokohama-shi, Kanagawa (JP)
(74) Representative: Haseltine Lake Kempner LLP

(56) References cited:
- EP-A2- 1 310 862
- US-A1- 2012 069 386
- US-A1- 2014 240 756

## Description

### BACKGROUND

### Technical Field

The present invention relates to an information processing apparatus, an information processing program, and an information processing method.

### Related Art

JP-A-2013-196668 discloses an information processing apparatus, an output control program, and an output system capable of restricting functions of output equipment in accordance with a network environment. The information processing apparatus providing the output equipment with an output job to includes setting providing means for acquiring a condition regarding setting of the output equipment from rule information which is associated with a network environment where the output equipment is provided and with a condition regarding setting in outputting an output job from the output equipment in the network environment, and for providing the acquired condition to the output equipment; and output job providing means for providing an output job corresponding to an output job acquisition request to the output equipment if the setting of the output job acquisition request satisfies the condition regarding setting of the output equipment.

European patent publication EP1310862 A2 discloses an imaging system with an authentification data storage that stores a plurality of pieces of authentification data in relationship to user IDs respectively representing owners of the plurality of communication devices. Further disclosed is a reading system that reads out one of the plurality of pieces of the authentification data corresponding to a user ID if the user ID is transmitted from the external device in relationship to the image data, and a searching system searches for a communication device with which a connection authentification is established using the authentification data read out by the reading system within a predetermined communication area with respect to the imaging system. An imaging system forms an image represented by the image data transmitted in relationship to the user ID from the external device when the communication device is detected by the searching system.

US 2014/0240756 discloses sending print jobs using trigger distances. In one example, a printer address for a network-connected printer, a printer location, and an identifier for a mobile computing device are received. Responsive to receiving a message that is sent to the printer address and that includes a print job, the print job is stored. The identifier is sent to a tracker computing device. A mobile device location is received from the tracker device. Responsive to determining a calculated distance between the mobile device and the printer is less than or equal to a trigger distance, the print job is sent to the printer.

### SUMMARY

In a pull printing system, a printing job stored in a server is acquired by a user and is output from an arbitrary output apparatus. In recent years, since an output operation is carried out from the output apparatus placed in convenience stores or business trip destinations in some cases, it is desirable to perform restriction of an output function in accordance with the environment. In JP-A-2013-196668, the restriction is determined by an IP address or a subnet mask assigned to the output apparatus.

However, in utilizing the IP address or the subnet mask, it is difficult to determine a location where the output apparatus is placed. However, attaching a GPS device or the like to each of the output apparatuses in order to grasp the location is costly.

An object of the present invention is to provide an information processing apparatus, an information processing program, and an information processing method executing print restriction in accordance with a position of an output location by using a mobile terminal held by a user when performing pull printing. The invention is defined in the independent claims to a server apparatus in a pull printing system, an information processing program and an information processing method in a server. Advantageous embodiments are set out in the sub-claims.

Accordingly it is possible to present correspondence contents based on information of each user in comparison with a case where print restriction is carried out by using an IP address and a subnet mask of the output equipment. In a case of the output apparatus satisfying the state where printing is desirable and in a case of receiving the second party's approval, it is possible to carry out the output operation.

The server apparatus may have a configuration in which the mobile terminal and the image output apparatus perform communication for the location information through short distance wireless communication. Accordingly, in a case of receiving the location information, it is possible to certify that the mobile terminal and the output apparatus are in close proximity to each other.

### BRIEF DESCRIPTION OF DRAWINGS

Exemplary embodiments of the present invention will be described in detail based on the following figures, wherein:
Fig. 1 is a diagram illustrating a configuration example of conceptual modules of a first exemplary embodiment;
Fig. 2 is an explanatory diagram illustrating an example of a system configuration using the first exemplary embodiment;
Fig. 3 is a flowchart illustrating an example of a process performed in the first exemplary embodiment;
Fig. 4 is an explanatory table illustrating an example of the data structure of a rule table;
Fig. 5 is a flowchart illustrating an example of a process performed in the first exemplary embodiment;
Fig. 6 is an explanatory table illustrating an example of the data structure of an image-processing-apparatus capability table;
Fig. 7 is a diagram illustrating a configuration example of conceptual modules of a second exemplary embodiment;
Fig. 8 is a flowchart illustrating an example of a process performed in the second exemplary embodiment;
Fig. 9 is an explanatory table illustrating an example of the data structure of a rule table; and
Fig. 10 is a block diagram illustrating an example of the hardware configuration of a computer that implements the exemplary embodiments.

### DETAILED DESCRIPTION

### First Exemplary Embodiment which does not describe part of the claimed invention

Hereinafter, an example of various exemplary embodiments to implement the invention will be described with reference to the drawings.

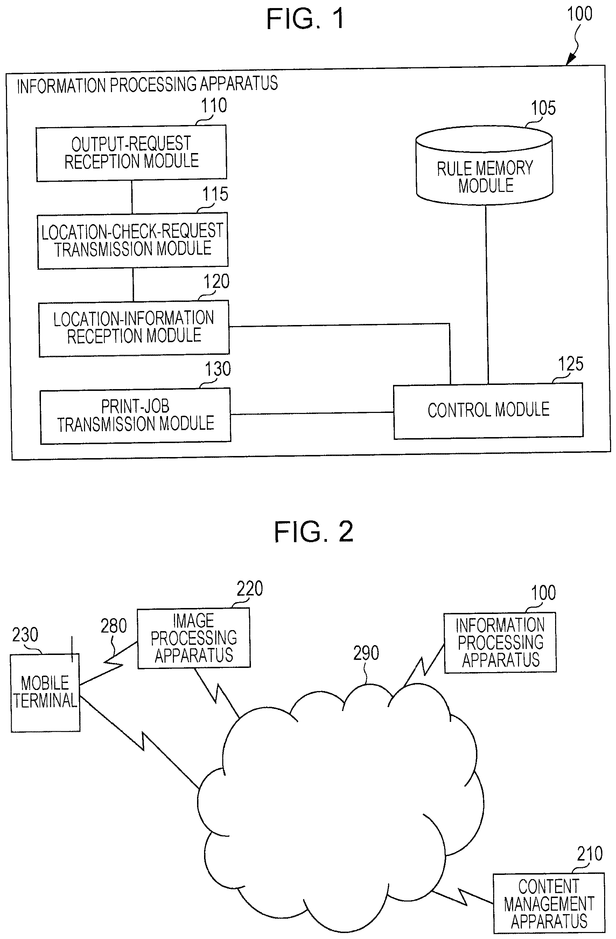

Fig. 1 illustrates a configuration example of conceptual modules of a first exemplary embodiment.

Note that the term "module" refers to generally logically separable components of software (computer programs) and hardware or the like. Modules in the exemplary embodiment thus refer to not only modules in a computer program but also modules in a hardware configuration. Accordingly, the description of the exemplary embodiment also serves as a description of a computer program for causing a computer to function as the modules (a program for causing a computer to execute steps, a program for causing a computer to function as components, and a program for causing a computer to implement functions) as well as a system and a method therefor. Meanwhile, the term "to store" and other terms equivalent to "to store" are used in descriptions. In a case where the exemplary embodiment describes a computer program, the term means storing something in a storage device or controlling something so as to store something in a storage device. The modules are provided for respective functions on a one-to-one basis. However, in implementing the functions, one program may constitute one module; one program may constitute multiple modules; and multiple programs may constitute one module. In addition, one computer may run multiple modules, and multiple computers may run one module in a distributed or parallel processing environment. Note that one module may include another module. Moreover, the term "connection" is used for not only a physical connection but also a logical connection (such as data exchange, instructions, or a reference relationship among data pieces). The term "predetermined" refers to having been determined before target processing. This term is used in such a manner as to include the meaning of being determined according to the situation at the determination time or to the situation thus far only before target processing, regardless of whether before or even after the start of processing in the present exemplary embodiment. Meanwhile, in a case of multiple "predetermined values", the values may be different from one another, or two or more of the values may be the same (including all of the values). Moreover, an expression meaning "if A, then B" is used in such a manner as to mean that "it is determined whether A holds true, and if it is determined that A holds true, then B is performed". However, this excludes a case where the determination of whether A holds true is not needed.

A system or a device includes not only a configuration in which multiple computers, hardware, devices, and the like are connected to each other through a communication unit such as a network (including a communication connection on a one-to-one basis), but also a configuration in which a computer, hardware, a device, or the like is implemented. The terms "device" and "system" are used as terms having the same meaning. It goes without saying that the "system" does not include a mere social "system" built in accordance with agreements worked out by humans.

In addition, to perform a processing operation or multiple processing operations in each module, the module reads target information from a storage device for each processing, performs the processing, and writes a processing result to the storage device. Accordingly, explanations of reading the content from the storage device before processing and writing the content to the storage device after the processing are omitted in some cases. Here, the storage device may include a hard disk, a random-access memory (RAM), an external storage medium, a storage device connected through a communication network, a register in a central processing unit (CPU), and other devices.

An information processing apparatus 100 that is the first exemplary embodiment controls printing in a pull printing system and includes, as illustrated in the example in Fig. 1, a rule memory module 105, an output-request reception module 110, a location-check-request transmission module 115, a location-information reception module 120, a control module 125, and a print-job transmission module 130.

In the pull printing system, a server apparatus (also referred to as, for example, a print server or a spool server) is used to store, for each user, a print job (hereinafter, also simply referred to as a job) transmitted from a client terminal such as a personal computer (PC), and an image output apparatus (hereinafter, also referred to as an image processing apparatus) acquires, from the server apparatus, the print job designated by the corresponding user and prints the job. The information processing apparatus 100 is used as the server apparatus in the pull printing system. Note that the server apparatus is not necessarily implemented by one apparatus and may be implemented by multiple apparatuses. For example, as will be described later by using Fig. 2, the function of the server apparatus in the pull printing system may be implemented by using the information processing apparatus 100 and a content management apparatus 210. Examples of the image output apparatus include a printer, a fax machine, and a multifunction printer (an image processing apparatus having two or more of functions of a scanner, a printer, a copier, a fax machine, and other apparatuses).

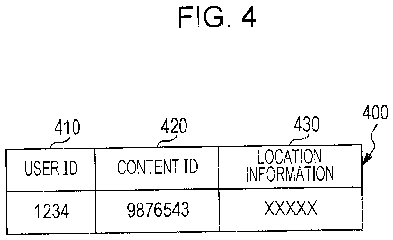

The rule memory module 105 is connected to the control module 125. The rule memory module 105 is used to store rules for controlling output of jobs each associated with a piece of user information and a piece of location information. For example, the rule memory module is used to store a rule table 400. Fig. 4 is an explanatory table illustrating an example of the data structure of the rule table 400. The rule table 400 has a user ID column 410, a content ID column 420, and a location information column 430. The user ID column 410 is used to store pieces of user information (user identifications (IDs)) for uniquely identifying users in the exemplary embodiment. The content ID column 420 is used to store pieces of information (content IDs) uniquely identifying pieces of content (such as documents to be printed) that are jobs in the exemplary embodiment. The location information column 430 is used to store pieces of location information. The location information may take any form as long as the information indicates a location. Examples of the location information include a location expressed by latitude and longitude (including an area), a name representing the region (such as a place name, a station name, or a building name), or an organization name (such as a company name or a school name).

Rows of the rule table 400 are each generated in accordance with a pull printing setting in advance performed by a user and represent rules for controlling job output. Specifically, each row has the user ID of a user who has performed the pull printing setting, a content ID representing content to be printed, and location information indicating a printing location. This means that an image output apparatus (printer) that is located at the printing location is scheduled to be used by the user to print the content.

The output-request reception module 110 is connected to the location-check-request transmission module 115. The output-request reception module 110 receives, from the image output apparatus, a print request for printing a job and user information regarding a user by whom the job print request is made. The user uses a user interface such as a keyboard or a touch panel of the image output apparatus and thereby designates a request for printing content registered in advance by setting the pull printing. At this time, a login process for identifying a user ID may be performed. In the login process, for example, a user ID, a password, and the like may be received through a user operation performed by using the touch panel or the like, and whether the received information matches that registered in advance may be checked. Information stored in an IC card of the user may also be checked by being read using an IC card reader or other devices, and biometric authentication may also be performed using a fingerprint or the like. The content to be output is designated through the user operation. Alternatively, the image output apparatus may obtain a list including content associated with the user ID by communicating with the information processing apparatus 100 and thereby may display the list to cause the user to select the content. The image output apparatus having received the print request transmits the user ID and the content ID to the information processing apparatus 100.

It goes without saying that the print request from the user is generally made by using the image output apparatus located at the location designated in the location information for designating pull printing. A print request made by using an image output apparatus not located at the location designated in the location information is rejected.

The location-check-request transmission module 115 is connected to the output-request reception module 110 and the location-information reception module 120. The location-check-request transmission module 115 transmits a location check request to a mobile terminal carried with the user from whom the print request has been made. For example, the information processing apparatus 100 is used to store the user ID of the user and an address (such as a mobile-phone number or an e-mail address) used as a contact address for transmitting a notification to the mobile terminal of the user having the user ID, the user ID and the address being stored in association with each other. The location-check-request transmission module 115 transmits the location check request to the address. The mobile terminal includes a mobile phone (including a smartphone), a tablet terminal and a notebook computer that are capable of communication, and other apparatuses. Note that the transmission may be performed through a notification by e-mail, chat, or social media, a push notification, or the like. The "location check request" is used to notify the mobile terminal of the user having the designated user ID (the user ID may be the user name or other information) that the user intends to output the content having the designated content ID (the content ID may be the content name or other information) and to thereby check the current location of the user (including the location of the mobile terminal). Note that the notification may include a date and time when the print request was made (year, month, day, hour, minute, second, and a time unit equal to or less than a second, or a combination of any of these may be used, or a time from the time point of the print request to the current time, such as "x minutes" may be used), the image output apparatus ID of the image output apparatus having transmitted the print request, and other information.

The location-information reception module 120 is connected to the location-check-request transmission module 115 and the control module 125. The location-information reception module 120 receives the location information from the mobile terminal of the user or through the image output apparatus having received the location information from the mobile terminal. The location information is transmitted from the mobile terminal in response to the location check request transmitted from the location-check-request transmission module 115. The term "location information from a mobile terminal" may include location information obtained using a global positioning system (GPS) incorporated in the mobile terminal, location information of a base station used in a mobile phone network, a beacon terminal ID transmitted from a beacon terminal supporting iBeacon (registered trademark) to the mobile terminal, and other information. In the case of the beacon terminal ID, a table in which beacon terminal IDs are each associated with information regarding a location where a corresponding beacon terminal is installed may be prepared in advance and may be used to extract location information on the basis of the received beacon terminal ID.

When receiving the location information from the mobile terminal, the image output apparatus transmits the location information to the information processing apparatus 100. The mobile terminal and the image output apparatus may perform communication for the location information through short distance wireless communication (such as near field communication (NFC)).

The control module 125 is connected to the rule memory module 105, the location-information reception module 120, and the print-job transmission module 130. If the user from whom the print request has been made is allowed to perform a job printing operation at the location indicated by the received location information, the control module 125 performs control to cause the print-job transmission module 130 to transmit the job to the image output apparatus. Specifically, if a piece of location information in the location information column 430 in the rule table 400 matches the location information received by the location-information reception module 120, the control module 125 determines that the user is allowed to perform the job printing operation. Note that the matching includes perfect matching, and a case where one of the locations indicated by the location information in the rule table 400 and indicated by the received location information is located within the area of the other. A case where a distance between the locations is shorter than or not longer than a predetermined distance is also regarded as a matching case.

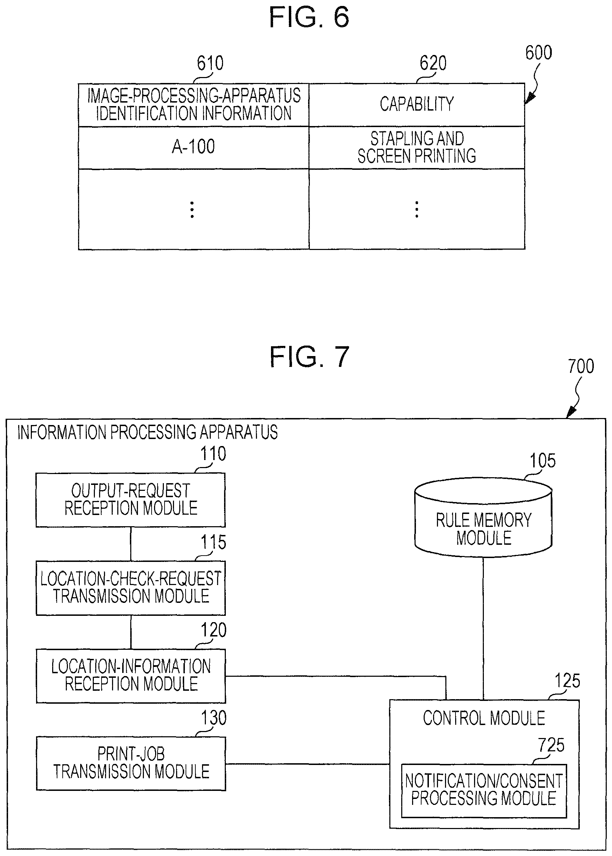

In addition, when receiving the print request, the control module 125 may also receive a desired print mode and may then determine whether to print the job in consideration of the capability of the image output apparatus. Examples of the "desired print mode" include color printing, 2-sided printing, stapling, and secure print. To perform the determination process, for example, an image-processing-apparatus capability table 600 is used. Fig. 6 is an explanatory table illustrating an example of the data structure of the image-processing-apparatus capability table 600. The image-processing-apparatus capability table 600 has an image-processing-apparatus identification information column 610 and a capability column 620. The image-processing-apparatus identification information column 610 is used to store pieces of identification information of image output apparatuses. The capability column 620 is used to store capabilities of the image output apparatuses. For example, the capability column 620 is used to store pieces of information respectively indicating whether color printing, 2-sided printing, stapling, and secure print may be performed. The image-processing-apparatus capability table 600 may be used to determine whether an image output apparatus that has received the print request is allowed to perform output in the desired print mode.

The print-job transmission module 130 is connected to the control module 125. The print-job transmission module 130 transmits the job to the image output apparatus. The job includes content to be output by at least the image output apparatus.

Fig. 2 is an explanatory diagram illustrating an example of a system configuration using the first exemplary embodiment.

An image processing apparatus 220 has functions of connecting to the information processing apparatus 100 and outputting content in the content management apparatus 210 and also has a user interface for designating content and the like to be output. The user interface function may be provided by a mobile terminal 230. Specifically, in such a case where the image processing apparatus 220 has a small screen, the mobile terminal 230 may provide the user interface function instead of the image processing apparatus 220 and may transmit the content of a user operation performed on the mobile terminal 230 to the image processing apparatus 220.

The content management apparatus 210 holds pieces of content to be printed.

The image processing apparatus 220 and the mobile terminal 230 are connected to each other through short distance wireless communication 280. The image processing apparatus 220 and the mobile terminal 230 may perform communication for location information through the short distance wireless communication 280. It goes without saying that the image processing apparatus 220 and the mobile terminal 230 may communicate with each other in wired communication using a universal serial bus (USB) or the like. The user has the mobile terminal 230 and performs an operation of a print request by using the image processing apparatus 220.

The information processing apparatus 100, the content management apparatus 210, the image processing apparatus 220, and the mobile terminal 230 are connected to each other through a communication network 290. The communication network 290 may be a wireless or wired network or a network using a combination of these, such as the Internet serving as a communication infrastructure or an intranet. The functions of the information processing apparatus 100 and the content management apparatus 210 may be implemented by using cloud services.

The image processing apparatus 220 needs to wait until the image processing apparatus 220 receives permission from the information processing apparatus 100 (a job transmitted from the information processing apparatus 100). The image processing apparatus 220 may wait in such a manner as to:
- perform polling at regular intervals;
- perform long polling (repeating connection and disconnection in such a manner that the connection is maintained for a predetermined time (such as one minute), disconnection is performed after the elapse of the predetermined time, and the connection is started after the elapse of a predetermined time (such as 30 seconds));
- maintain connection; or
- transmit, to the output-request reception module 110, a request for checking whether a print request transmitted through a user operation of the image processing apparatus 220 has been received.

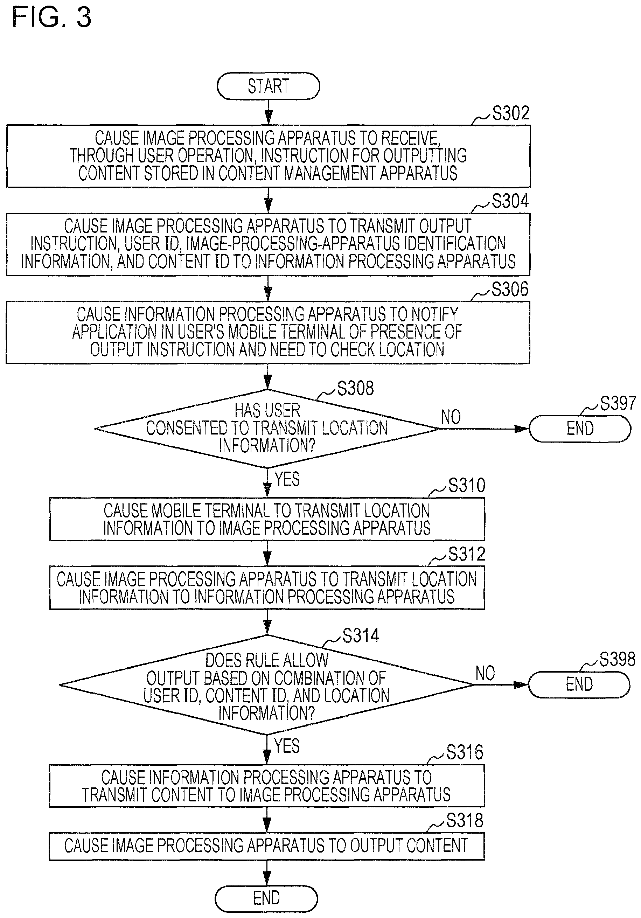

Fig. 3 is a flowchart illustrating an example of a process performed in the first exemplary embodiment.

In step S302, an image processing apparatus 220 receives, through an operation performed by a user, an instruction for outputting content in the content management apparatus 210.

In step S304, the image processing apparatus 220 transmits, to the information processing apparatus 100, the output instruction, the user ID of the user, the identification information of the image processing apparatus 220, and the content ID of the content.

In step S306, the information processing apparatus 100 notifies an application in the mobile terminal 230 of the user of the presence of the output instruction and the need to check the location. In accordance with the notification, the mobile terminal 230 indicates that the location check request has been made, for example, displays a message "Do you transmit information regarding the current location?"

In step S308, it is determined whether the user has consented to transmit location information. If the user has consented to transmit location information, the process proceeds to step S310. If the user has not consented to transmit location information, the process is terminated (step S397).

In step S310, the mobile terminal 230 transmits location information to the image processing apparatus 220.

In step S312, the image processing apparatus 220 transmits the location information to the information processing apparatus 100.

In step S314, it is determined whether the job output control rule allows output based on the combination of the user ID, the content ID, and the location information. If the job output control rule allows output, the process proceeds to step S316. If the job output control rule does not allow output, the process is terminated (step S398). Specifically, it is determined whether a piece of information in the rule table 400 matches the information received by the information processing apparatus 100 as described above.

In step S316, the information processing apparatus 100 transmits the content to the image processing apparatus 220.

In step S318, the image processing apparatus 220 outputs the content.

If the process is terminated in step S397 or S398, the image processing apparatus 220 does not output the content. In addition, instead of performing steps S310 and S312, the mobile terminal 230 may transmit the location information directly to the information processing apparatus 100.

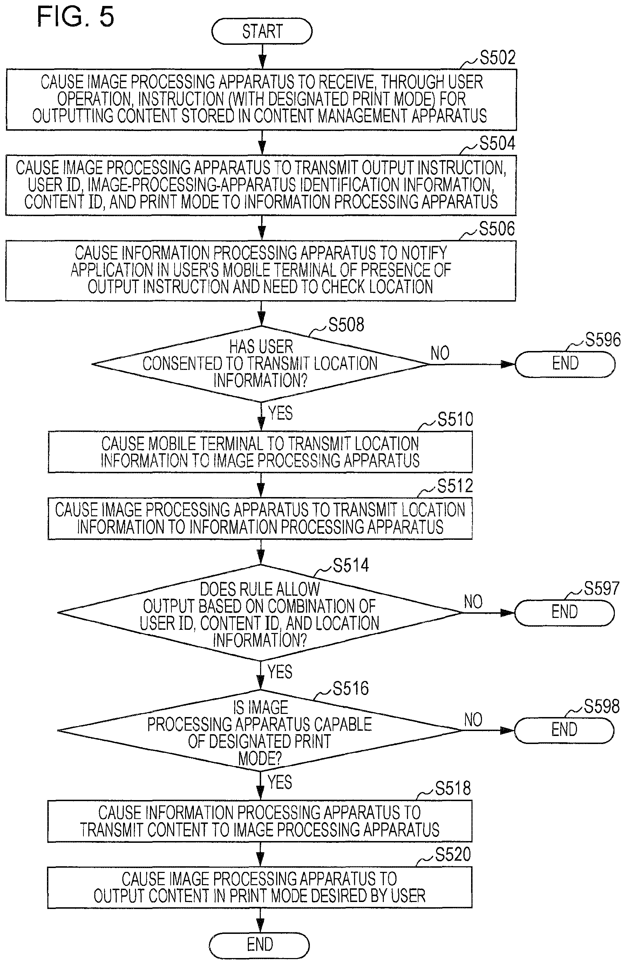

Fig. 5 is a flowchart illustrating an example of a process performed in the first exemplary embodiment. The flowchart illustrated in the example in Fig. 5 additionally illustrates a determination process in which whether a desired print mode is used in printing and has steps S516 and S598 added between steps S314 and S316 in the flowchart illustrated in the example in Fig. 3.

In step S502, an image processing apparatus 220 receives, through an operation performed by a user, an instruction (with a designated print mode) for outputting content in the content management apparatus 210.

In step S504, the image processing apparatus 220 transmits, to the information processing apparatus 100, the output instruction, the user ID of the user, the identification information of the image processing apparatus 220, the content ID of the content, and the print mode.

In step S506, the information processing apparatus 100 notifies an application in the mobile terminal 230 of the user of the presence of the output instruction and the need to check the location.

In step S508, it is determined whether the user has consented to transmit location information. If the user has consented to transmit location information, the process proceeds to step S510. If the user has not consented to transmit location information, the process is terminated (step S596).

In step S510, the mobile terminal 230 transmits location information to the image processing apparatus 220.

In step S512, the image processing apparatus 220 transmits the location information to the information processing apparatus 100.

In step S514, it is determined whether the job output control rule allows output based on the combination of the user ID, the content ID, and the location information. If the job output control rule allows output, the process proceeds to step S516. If the job output control rule does not allow output, the process is terminated (step S597).

In step S516, it is determined whether the image processing apparatus 220 is capable of the designated print mode. If the image processing apparatus 220 is capable of the designated print mode, the process proceeds to step S518. If the image processing apparatus 220 is not capable of the designated print mode, the process is terminated (step S598).

In step S518, the information processing apparatus 100 transmits the content to the image processing apparatus 220.

In step S520, the image processing apparatus 220 outputs the content in the print mode desired by the user.

If the process is terminated in step S596, S597 or S598, the image processing apparatus 220 does not output the content. In addition, instead of performing steps S510 and S512, the mobile terminal 230 may transmit the location information directly to the information processing apparatus 100.

### Second Exemplary Embodiment

Fig. 7 is a diagram illustrating a configuration example of conceptual modules of a second exemplary embodiment.

An information processing apparatus 700 includes a notification/consent processing module 725 added to the control module 125 of the information processing apparatus 100 in the first exemplary embodiment. The information processing apparatus 700 includes the rule memory module 105, the output-request reception module 110, the location-check-request transmission module 115, the location-information reception module 120, the control module 125, and the print-job transmission module 130. Note that the same components as those in the first exemplary embodiment are denoted by the same reference numerals, and repeated explanation is omitted.

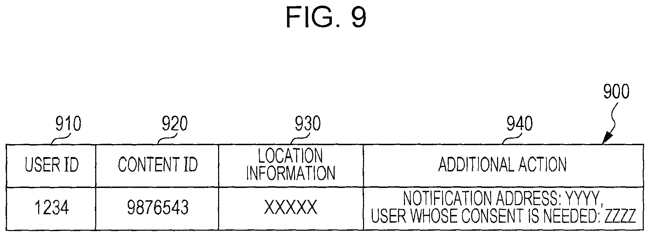

The rule memory module 105 is used to store pieces of information each regarding a second party in association with the corresponding rule. The second party is different from the user and is requested for output acceptance. Examples of the second party include a superior of a user. For example, the rule memory module 105 is used to store a rule table 900. Fig. 9 is an explanatory table illustrating an example of the data structure of the rule table 900. The rule table 900 has an additional action column 940 added to the rule table 400 illustrated in the example in Fig. 4. The rule table 900 has a user ID column 910, a content ID column 920, a location information column 930, and the additional action column 940. The user ID column 910 is used to store user IDs. The content ID column 920 is used to store content IDs. The location information column 930 is used to store pieces of location information. The additional action column 940 is used to store additional actions, for example, addresses that are each a contact address of the second party who receives a notification or an acceptance request when a print request is received from the image output apparatus. The additional action column 940 may be used to store not only specific addresses but also positions, posts, or the like such as a superior of the user or an accounting manager. A position, a post, or the like may be designated to extract the corresponding address.

The control module 125 includes the notification/consent processing module 725.

If location information received by the location-information reception module 120 matches one of the rules in the rule memory module 105, the notification/consent processing module 725 transmits an acceptance request to the second party associated with the rule. For example, the rule table 900 is used to acquire the address of the second party, and an acceptance request is transmitted to the address. Note that the transmission may be performed through a notification by e-mail, chat, or social media, a push notification, or the like. The "acceptance request" is used to notify the second party that a user having a designated user ID intends to output content having a designated content ID by using an image output apparatus having a designated image output apparatus ID (the image output apparatus ID may be information indicating a location) and is also used to obtain an acceptance (permission) of the output. The notification/consent processing module 725 subsequently receives a reply transmitted from the second party in response to the acceptance request. The notification/consent processing module 725 may be designed to only transmit a notification.

If the notification/consent processing module 725 receives information indicating the acceptance from the second party, the control module 125 controls the print-job transmission module 130 to cause the image output apparatus to transmit a job. Specifically, if pieces of information in the user ID column 910, the content ID column 920, and the location information column 930, respectively, in the rule table 900 are checked in the same manner as in the information processing apparatus 100, and further if the second party in the additional action column 940 accepts the output, the control module 125 determines that the user may print the job.

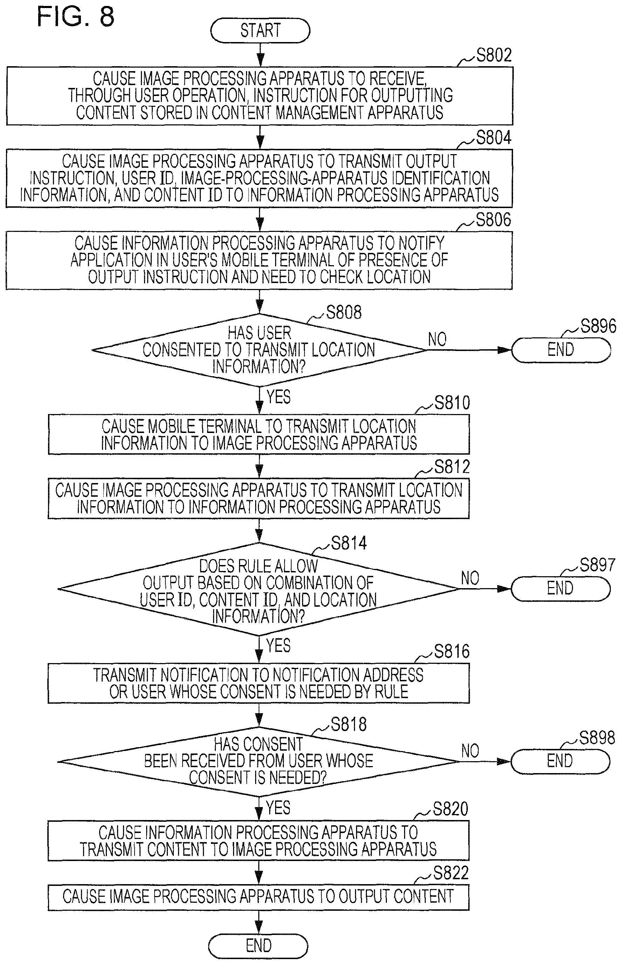

Fig. 8 is a flowchart illustrating an example of a process performed in the second exemplary embodiment. The flowchart illustrated in the example in Fig. 8 additionally illustrates a determination process of determining whether there has been a need for consent. The flowchart has steps S816, S818, and S898 added between steps S314 and S316 in the flowchart illustrated in the example in Fig. 3.

In step S802, an image processing apparatus 220 receives, through an operation performed by a user, an instruction for outputting content in the content management apparatus 210.

In step S804, the image processing apparatus 220 transmits, to the information processing apparatus 700, the output instruction, the user ID of the user, the identification information of the image processing apparatus 220, and the content ID of the content.

In step S806, the information processing apparatus 700 notifies an application in the mobile terminal 230 of the user of the presence of the output instruction and the need to check the location.

In step S808, it is determined whether the user has consented to transmit location information. If the user has consented to transmit location information, the process proceeds to step S810. If the user has not consented to transmit location information, the process is terminated (step S896).

In step S810, the mobile terminal 230 transmits location information to the image processing apparatus 220.

In step S812, the image processing apparatus 220 transmits the location information to the information processing apparatus 700.

In step S814, it is determined whether the job output control rule allows output based on the combination of the user ID, the content ID, and the location information. If the job output control rule allows output, the process proceeds to step S816. If the job output control rule does not allow output, the process is terminated (step S897).

In step S816, the information processing apparatus 700 transmits a notification to a notification address or a user whose consent is needed, the notification address and the user being associated with the corresponding rule.

In step S818, the information processing apparatus 700 determines whether consent has been received from the user whose consent is needed. If consent has been received, the process proceeds to step S820. If consent has not been received, the process is terminated (step S898).

In step S820, the information processing apparatus 700 transmits the content to the image processing apparatus 220.

In step S822, the image processing apparatus 220 outputs the content.

If the process is terminated in step S896, S897, or S898, the image processing apparatus 220 does not output the content. In addition, instead of performing steps S810 and S812, the mobile terminal 230 may transmit the location information directly to the information processing apparatus 700.

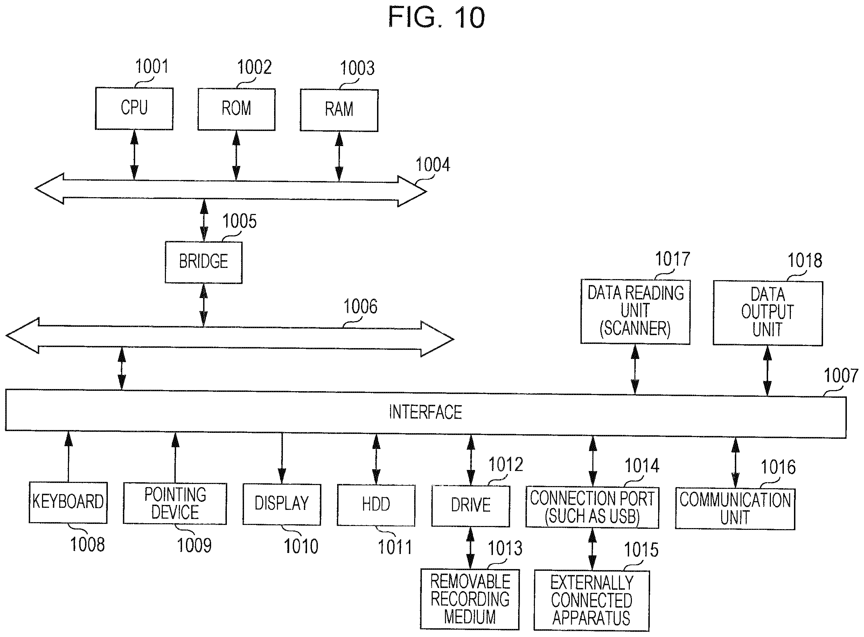

An example of the hardware configuration of an information processing apparatus according to the exemplary embodiments will be described with reference to Fig. 10. The configuration illustrated in Fig. 10 is implemented by, for example, a PC and is an example of a hardware configuration having a data reading unit 1017 such as a scanner and a data output unit 1018 such as a printer.

A CPU 1001 is a controller that executes processes in accordance with a computer program describing sequences for running various modules described in the exemplary embodiments, that is, the output-request reception module 110, the location-check-request transmission module 115, the location-information reception module 120, the control module 125, the print-job transmission module 130, the notification/consent processing module 725, and other modules.

A read-only memory (ROM) 1002 is used to store the program used by the CPU 1001 operational parameters, and the like. A RAM 1003 is used to store the program used when the CPU 1001 is run, parameters appropriately varying when the CPU 1001 is run, and the like. These components are mutually connected by a host bus 1004 including a CPU bus and other components.

The host bus 1004 is connected to an external bus 1006 such as a peripheral component interconnect/interface (PCI) bus with a bridge 1005 placed therebetween.

A keyboard 1008 and a pointing device 1009 such as a mouse are input devices operated by an operator. A display 1010 has a liquid crystal display device, a cathode ray tube (CRT), or the like and displays various pieces of information as text information and image information.

A hard disk drive (HDD) 1011 has a hard disk (may be a flash memory or the like) incorporated therein, drives the hard disk, and records and reproduces the program run by the CPU 1001 and information. The hard disk implements a function of the rule memory module 105 or other modules. Further, the hard disk is used to store various pieces of other data (such as content), various computer programs, and the like.

A drive 1012 reads out data or a program recorded in a removable recording medium 1013 such as a magnetic disk, an optical disk, a magneto-optical disk, or a semiconductor memory that is attached to the drive 1012 and supplies the data or the program to the RAM 1003 connected to the drive 1012 with an interface 1007, the external bus 1006, the bridge 1005, and the host bus 1004 located therebetween. The removable recording medium 1013 is also usable as a data recording area like the hard disk.

A connection port 1014 is a port for connection with an externally connected apparatus 1015 and has a USB- or IEEE1394-compliant connection unit. The connection port 1014 is connected to the CPU 1001 and the like with the interface 1007, the external bus 1006, the bridge 1005, the host bus 1004, and the like located therebetween. A communication unit 1016 is connected to a communication network and executes processes of data communication with external devices. The data reading unit 1017 is, for example, a scanner and executes processes of reading documents. The data output unit 1018 is, for example, a printer and executes processes of outputting document data.

The hardware configuration of the information processing apparatus in Fig. 10 merely illustrates a configuration example, and each exemplary embodiment is not limited to the configuration in Fig. 10. Any configuration that enables the modules described in the exemplary embodiment to be run may be employed. For example, at least one of the modules may be configured to run on hardware dedicated to the module (such as an application specific integrated circuit (ASIC)). At least one of the modules may be in an external system to be connected through a communication network. Further, multiple systems each serving as the system in Fig. 10 may be mutually connected through a communication network to work in cooperation with each other. In particular, the configuration may be incorporated in not only a personal computer but also a mobile telecommunication device (including a mobile phone, a smartphone, a mobile device, a wearable computer, and other devices), a personal digital electronics, a robot, a copier, a fax machine, a scanner, a printer, a multifunction printer, and other devices.

The exemplary embodiments may be combined with each other (for example, a specific module in one of the exemplary embodiments may be added to the other or may be mutually replaced with a module in the other exemplary embodiment), without describing a part of the claimed invention. A technology in the related art may be employed for processes executed by the modules. For example, the process in the flowchart illustrated in the example in Fig. 5 may be combined with the process in the flowchart illustrated in the example in Fig. 8.

A time period may be added to the rules stored in the rule memory module 105. For example, the rule table 400 or the rule table 900 may have a time-period column. Specifically, not only a location but also a temporal condition may be designated as the rule. For example, a time period "from xx hour to yy hour" may be designated. On condition that a print request is received within the time period, a job may be transmitted to the image processing apparatus 220.

Without being part of the claimed invention, the control in the exemplary embodiments may also be performed at the time of copying, not pull printing. Specifically, a job may include a copy job. For predetermined user IDs and predetermined locations, processes similar to those in the exemplary embodiments are executed. As an alternative to the content ID, scanned image data, a characteristic extracted from the image data, embedded information extracted from a scanned image, or the like may be used. The term "embedded information" denotes an image code systematically generated to express electronic data in a machine-readable form. Specifically, the embedded information is data expressed using a one-dimensional barcode, a two-dimensional code, a digital watermark, or the like. For example, copying may be permitted in such a manner that information identifying a document is extracted by analyzing a Quick Response (QR) code (registered trademark) that is a two-dimensional code and is printed on a document to be copied, the extracted information is transmitted to the information processing apparatus 100, and rules are checked in the same manner as in the pull printing.

Note that the program described above may be provided by using a recording medium having the program recorded therein, and may be provided by using a communication unit. In this case, for example, the program described above may be regarded as an exemplary embodiment which is not part of the claimed invention of a "non-transitory computer readable medium having a program recorded therein".

The "non-transitory computer readable medium having a program recorded therein" refers to a computer readable recording medium having a program recorded therein that is used for installation, execution, distribution, and the like of a program.

Examples of the recording medium include a digital versatile disk (DVD) supporting "DVD-R, DVD-RW, DVD-RAM, and the like" that are standards designated by the DVD Forum and "DVD+R, DVD+RW, and the like" that are standards designated in accordance with "DVD+RW; a compact disc (CD) such as a CD read-only memory (CD-ROM), a CD recordable (CD-R), a CD rewritable (CD-RW), or the like; a Blu-ray (registered trademark) disc; a magneto-optical disk (MO); a flexible disk (FD); a magnetic tape; a hard disk; a ROM; an electrically erasable and programmable ROM (EEPROM (registered trademark)); a flash memory; a RAM; and a secure digital (SD) memory card.

The aforementioned program or part of the program may also be saved on the recording medium to be stored or distributed. The program or part thereof may be transmitted through communication by using a transmission medium such as a wired network or a wireless communication network used for a local area network (LAN), a metropolitan area network (MAN), a wide area network (WAN), the Internet, an intranet, an extranet, or the like; or a combination of these. Alternatively, the program or part thereof may be transmitted by using carrier signals.

Further, the program may be part of another program, or may be saved on a recording medium together with another program. The program may also be divided to be saved on multiple recording media. The program may be saved in any manner such as by being compressed or encrypted, as long as the program is restorable.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. A server apparatus (100) for a pull printing system the server apparatus comprising:
a memory (105) that stores a rule for controlling job output, the rule being generated in accordance with a pull printing setting in advance performed by a user, the rule associating with one another: a job; user information; and location information indicating a printing location;
a print-request reception unit (110) that receives, from an image output apparatus (220) at the printing location, a print request for printing the job and user information regarding a user from whom the print request is made;
a first transmission unit (115) that transmits a location check request to a mobile terminal (230) carried with the user from whom the print request is made;
a location-information reception unit (120) that receives location information indicating a location of the mobile terminal from the mobile terminal carried with the user or via the image output apparatus having received the location information from the mobile terminal; wherein
the memory storing, in association with the rule, a second party who is different from the user and who is requested for output acceptance, the server apparatus further comprising a second transmission unit (130) and a third transmission unit the third transmission unit adapted to transmit, in a case where the location information received by the location-information reception unit matches the location information in the rule, an acceptance request to the second party associated with the rule, and a reply reception unit that receives a reply transmitted from the second party in response to the acceptance request, and in a case where information indicating acceptance is received from the second party, and the user from whom the print request is made is allowed to print the job at a location indicated by the received location information, the second transmission unit (130) transmits the job to the image output apparatus at the printing location.

2. The server apparatus (100) according to Claim 1,
wherein the mobile terminal (230) and the image output apparatus (220) perform communication for the location information through short distance wireless communication.

3. An information processing program comprising instructions, which when executed by a server apparatus (100) for a pull printing system, causing the server apparatus to execute a process comprising:
storing a rule for controlling job output, the rule being generated in accordance with a pull printing setting in advance performed by a user, the rule associating with one another: a job; user information; and location information indicating a printing location;
receiving, from an image output apparatus at the printing location, a print request for printing the job and user information regarding a user from whom the print request is made;
transmitting a location check request to a mobile terminal carried with the user from whom the print request is made;
receiving location information indicating a location of the mobile terminal from the mobile terminal carried with the user or via the image output apparatus having received the location information from the mobile terminal; wherein
the memory storing, in association with the rule, a second party who is different from the user and who is requested for output acceptance, the process further comprising transmitting by a third transmission unit, in a case where the location information received by the location-information reception unit matches the location information in the rule, an acceptance request to the second party associated with the rule, and a reply reception unit that receives a reply transmitted from the second party in response to the acceptance request, and in a case where information indicating acceptance is received from the second party, and the user from whom the print request is made is allowed to print the job at a location indicated by the received location information, transmitting by a second transmission unit (130) the job to the image output apparatus at the printing location.

4. An information processing method in a server apparatus (100) for a pull printing system, the method comprising:
storing a rule for controlling job output, the rule being generated in accordance with a pull printing setting in advance performed by a user, the rule associating with one another: a job; user information; and location information indicating a printing location;
receiving, from an image output apparatus at the printing location, a print request for printing the job and user information regarding a user from whom the print request is made;
transmitting a location check request to a mobile terminal carried with the user from whom the print request is made;
receiving location information indicating a location of the mobile terminal from the mobile terminal carried with the user or via the image output apparatus having received the location information from the mobile terminal; wherein
the memory storing, in association with the rule, a second party who is different from the user and who is requested for output acceptance, the method further comprising transmitting by a third transmission unit, in a case where the location information received by the location-information reception unit matches the location information in the rule, an acceptance request to the second party associated with the rule, and a reply reception unit that receives a reply transmitted from the second party in response to the acceptance request, and in a case where information indicating acceptance is received from the second party, and the user from whom the print request is made is allowed to print the job at a location indicated by the received location information, transmitting by a second transmission unit (130) the job to the image output apparatus at the printing location.

## Patentansprüche

1. Servervorrichtung (100) für ein Pull-Drucksystem, wobei die Servervorrichtung umfasst:
einen Speicher (105), der eine Regel zum Steuern der Auftragsausgabe speichert, wobei die Regel gemäß einer von einem Benutzer im Voraus durchgeführten Pull-Druckeinstellung erzeugt wird, wobei die Regel zueinander zuordnet: einen Auftrag; Benutzerinformationen; und
Ortsinformationen, die einen Druckort angeben;
eine Druckanforderungsempfangseinheit (110), die von einer Bildausgabevorrichtung (220) an dem Druckort eine Druckanforderung zum Drucken des Auftrags und Benutzerinformationen bezüglich eines Benutzers, von dem die Druckanforderung gestellt wurde, empfängt;
eine erste Sendeeinheit (115), die eine Ortprüfungsanforderung an ein mobiles Endgerät (230), das von dem Benutzer, von dem die Druckanforderung gestellt wurde, getragen wird, sendet;
eine Ortsinformationsempfangseinheit (120), die Ortsinformationen, die einen Ort des mobilen Endgeräts angeben, von dem mobilen Endgerät, das von dem Benutzer getragen wird, oder über die Bildausgabevorrichtung, die die Ortsinformationen von dem mobilen Endgerät empfangen hat, empfängt; wobei
der Speicher in Zuordnung zu der Regel eine zweite Partei, die sich von dem Benutzer unterscheidet und die zur Akzeptanz der Ausgabe aufgefordert wird, speichert, die Servervorrichtung ferner umfassend eine zweite Sendeeinheit (130) und eine dritte Sendeeinheit, wobei die dritte Sendeeinheit dazu ausgelegt ist, in einem Fall, in dem die von der Ortsinformationsempfangseinheit empfangenen Ortsinformationen mit den Ortsinformationen in der Regel übereinstimmen, eine Akzeptanzanforderung an die der Regel zugeordnete zweite Partei zu senden, und eine Antwortempfangseinheit, die eine von der zweiten Partei gesendete Antwort als Antwort auf die Akzeptanzanforderung empfängt, und wobei in einem Fall, in dem Informationen, die eine Akzeptanz angeben, von der zweiten Partei empfangen werden, und dem Benutzer, von dem die Druckanforderung gestellt wurde, erlaubt ist, den Auftrag an einem Ort, der durch die empfangenen Ortsinformationen angegeben wird, zu drucken, die zweite Sendeeinheit (130) den Auftrag an die Bildausgabevorrichtung an dem Druckort sendet.

2. Servervorrichtung (100) nach Anspruch 1,
wobei das mobile Endgerät (230) und die Bildausgabevorrichtung (220) eine Kommunikation der Ortsinformationen durch eine drahtlose Kurzstreckenkommunikation durchführen.

3. Informationsverarbeitungsprogramm, das Anweisungen umfasst, die, wenn sie von einer Servervorrichtung (100) für ein Pull-Drucksystem ausgeführt werden, bewirken, dass die Servervorrichtung einen Prozess ausführt, der umfasst:
Speichern einer Regel zum Steuern einer Auftragsausgabe, wobei die Regel gemäß einer von einem Benutzer im Voraus durchgeführten Pull-Druckeinstellung erzeugt wird, wobei die Regel zueinander zuordnet: einen Auftrag; Benutzerinformationen; und Ortsinformationen, die einen Druckort angeben;
Empfangen, von einer Bildausgabevorrichtung an dem Druckort, einer Druckanforderung zum Drucken des Auftrags und von Benutzerinformationen bezüglich eines Benutzers, von dem die Druckanforderung gestellt wurde;
Senden einer Ortsprüfungsanforderung an ein mobiles Endgerät, das von dem Benutzer, von dem die Druckanforderung gestellt wurde, getragen wird;
Empfangen von Ortsinformationen, die einen Ort des mobilen Endgeräts angeben, von dem mobilen Endgerät, das von dem Benutzer getragen wird, oder über die Bildausgabevorrichtung, die die Ortsinformationen von dem mobilen Endgerät empfangen hat; wobei der Speicher in Zuordnung zu der Regel eine zweite Partei, die sich von dem Benutzer unterscheidet und die zur Akzeptanz der Ausgabe aufgefordert wird, speichert, wobei der Prozess ferner umfasst Senden, durch eine dritte Sendeeinheit, in einem Fall, in dem die von der Ortsinformationsempfangseinheit empfangenen Ortsinformationen mit den Ortsinformationen in der Regel übereinstimmen, einer Akzeptanzanforderung an die der Regel zugeordnete zweite Partei, und eine Antwortempfangseinheit, die eine von der zweiten Partei als Antwort auf die Akzeptanzanforderung gesendete Antwort empfängt, und in einem Fall, in dem Informationen, die eine Akzeptanz angeben, von der zweiten Partei empfangen werden, und dem Benutzer, von dem die Druckanforderung gestellt wurde, erlaubt ist, den Auftrag an einem Ort, der durch die empfangenen Ortsinformationen angegeben wird, zu drucken, Senden, durch eine zweite Sendeeinheit (130), des Auftrags an die Bildausgabevorrichtung an dem Druckort.

4. Informationsverarbeitungsverfahren in einer Servervorrichtung (100) für ein Pull-Drucksystem, wobei das Verfahren umfasst:
Speichern einer Regel zum Steuern einer Auftragsausgabe, wobei die Regel gemäß einer von einem Benutzer im Voraus durchgeführten Pull-Druckeinstellung erzeugt wird, wobei die Regel zueinander zuordnet: einen Auftrag; Benutzerinformationen; und Ortsinformationen, die einen Druckort angeben;
Empfangen, von einer Bildausgabevorrichtung an dem Druckort, einer Druckanforderung zum Drucken des Auftrags und von Benutzerinformationen bezüglich eines Benutzers, von dem die Druckanforderung gestellt wurde;
Senden einer Ortsprüfungsanforderung an ein mobiles Endgerät, das von dem Benutzer, von dem die Druckanforderung gestellt wurde, getragen wird;
Empfangen von Ortsinformationen, die einen Ort des mobilen Endgeräts angeben, von dem mobilen Endgerät, das von dem Benutzer getragen wird, oder über die Bildausgabevorrichtung, die die Ortsinformationen von dem mobilen Endgerät empfangen hat; wobei der Speicher in Zuordnung zu der Regel eine zweite Partei, die sich von dem Benutzer unterscheidet und die zur Akzeptanz der Ausgabe aufgefordert wird, speichert, wobei das Verfahren ferner umfasst Senden, durch eine dritte Sendeeinheit, in einem Fall, in dem die von der Ortsinformationsempfangseinheit empfangenen Ortsinformationen mit den Ortsinformationen in der Regel übereinstimmen, einer Akzeptanzanforderung an die der Regel zugeordnete zweite Partei, und eine Antwortempfangseinheit, die eine von der zweiten Partei als Antwort auf die Akzeptanzanforderung gesendete Antwort empfängt, und in einem Fall, in dem Informationen, die eine Akzeptanz angeben, von der zweiten Partei empfangen werden, und dem Benutzer, von dem die Druckanforderung gestellt wurde, erlaubt ist, den Auftrag an einem Ort, der durch die empfangenen Ortsinformationen angegeben wird, zu drucken, Senden, durch eine zweite Sendeeinheit (130), des Auftrags an die Bildausgabevorrichtung an dem Druckort.

## Revendications

1. Appareil serveur (100) pour un système d'impression par tirage, l'appareil serveur comprenant :
une mémoire (105) qui stocke une règle pour commander une sortie de tâche, la règle étant générée conformément à un réglage d'impression par tirage effectué à l'avance par un utilisateur, la règle associant mutuellement : une tâche ; des informations d'utilisateur ; et des informations d'emplacement indiquant un emplacement d'impression ;
une unité de réception de demande d'impression (110) qui reçoit, à partir d'un appareil de sortie d'image (220) au niveau de l'emplacement d'impression, une demande d'impression pour imprimer la tâche et des informations d'utilisateur concernant un utilisateur par qui la demande d'impression est réalisée ;
une première unité de transmission (115) qui transmet une demande de vérification d'emplacement à un terminal mobile (230) transporté avec l'utilisateur par qui la demande d'impression est réalisée ;
une unité de réception d'informations d'emplacement (120) qui reçoit des informations d'emplacement indiquant un emplacement du terminal mobile à partir du terminal mobile transporté avec l'utilisateur ou via l'appareil de sortie d'image ayant reçu les informations d'emplacement du terminal mobile ; dans lequel
la mémoire stockant, en association avec la règle, un second tiers qui est différent de l'utilisateur et qui fait l'objet d'une demande d'acceptation de sortie, l'appareil serveur comprenant en outre une deuxième unité de transmission (130) et
une troisième unité de transmission, la troisième unité de transmission étant adaptée pour transmettre, dans un cas où les informations d'emplacement reçues par l'unité de réception d'informations d'emplacement correspondent aux informations d'emplacement dans la règle, une demande d'acceptation au second tiers associé à la règle, et une unité de réception de réponse qui reçoit une réponse transmise par le second tiers en réponse à la demande d'acceptation, et dans un cas où des informations indiquant une acceptation sont reçues du second tiers, et l'utilisateur par qui la demande d'impression est réalisée est autorisé à imprimer la tâche au niveau d'un emplacement indiqué par les informations d'emplacement reçues, la deuxième unité de transmission (130) transmet la tâche à l'appareil de sortie d'image au niveau de l'emplacement d'impression.

2. Appareil serveur (100) selon la revendication 1, dans lequel le terminal mobile (230) et l'appareil de sortie d'image (220) effectuent une communication pour les informations d'emplacement par l'intermédiaire d'une communication sans fil courte distance.

3. Programme de traitement d'informations comprenant des instructions qui, lorsqu'elles sont exécutées par un appareil serveur (100) pour un système d'impression par tirage, amènent l'appareil serveur à exécuter un processus comprenant les étapes consistant à :
stocker une règle pour commander une sortie de tâche, la règle étant générée conformément à un réglage d'impression par tirage effectué à l'avance par un utilisateur, la règle associant mutuellement : une tâche ; des informations de l'utilisateur ; et des informations d'emplacement indiquant un emplacement d'impression ;
recevoir, à partir d'un appareil de sortie d'image au niveau de l'emplacement d'impression, une demande d'impression pour imprimer la tâche et des informations d'utilisateur concernant un utilisateur par qui la demande d'impression est réalisée ;
transmettre une demande de vérification d'emplacement à un terminal mobile transporté avec l'utilisateur par qui la demande d'impression est réalisée ;
recevoir des informations d'emplacement indiquant un emplacement du terminal mobile à partir du terminal mobile transporté avec l'utilisateur ou via l'appareil de sortie d'image ayant reçu les informations d'emplacement du terminal mobile ; dans lequel
la mémoire stocke, en association avec la règle, un second tiers qui est différent de l'utilisateur et qui fait l'objet d'une demande d'acceptation de sortie, le processus comprenant en outre l'étape consistant à transmettre, par l'intermédiaire d'une troisième unité de transmission, dans un cas où les informations d'emplacement reçues par l'unité de réception d'informations d'emplacement correspondent aux informations d'emplacement dans la règle, une demande d'acceptation au second tiers associé à la règle, et une unité de réception de réponse qui reçoit une réponse transmise par le second tiers en réponse à la demande d'acceptation, et dans un cas où des informations indiquant une acceptation sont reçues du second tiers, et l'utilisateur par qui la demande d'impression est réalisée est autorisé à imprimer la tâche au niveau d'un emplacement indiqué par les informations d'emplacement reçues, transmettre par la deuxième unité de transmission (130) la tâche à l'appareil de sortie d'image au niveau de l'emplacement d'impression.

4. Procédé de traitement d'informations dans un appareil serveur (100) pour un système d'impression par tirage, le procédé comprenant les étapes consistant à :
stocker une règle pour commander une sortie de tâche, la règle étant générée conformément à un réglage d'impression par tirage effectué à l'avance par un utilisateur, la règle associant mutuellement : une tâche ; des informations de l'utilisateur ; et des informations d'emplacement indiquant un emplacement d'impression ;
recevoir, à partir d'un appareil de sortie d'image au niveau de l'emplacement d'impression, une demande d'impression pour imprimer la tâche et des informations d'utilisateur concernant un utilisateur par qui la demande d'impression est réalisée ;
transmettre une demande de vérification d'emplacement à un terminal mobile transporté avec l'utilisateur par qui la demande d'impression est réalisée ;
recevoir des informations d'emplacement indiquant un emplacement du terminal mobile à partir du terminal mobile transporté avec l'utilisateur ou via l'appareil de sortie d'image ayant reçu les informations d'emplacement du terminal mobile ; dans lequel
la mémoire stocke, en association avec la règle, un second tiers qui est différent de l'utilisateur et qui fait l'objet d'une demande d'acceptation de sortie, le procédé comprenant en outre l'étape consistant à transmettre, par l'intermédiaire d'une troisième unité de transmission, dans un cas où les informations d'emplacement reçues par l'unité de réception d'informations d'emplacement correspondent aux informations d'emplacement dans la règle, une demande d'acceptation au second tiers associé à la règle, et une unité de réception de réponse qui reçoit une réponse transmise par le second tiers en réponse à la demande d'acceptation, et dans un cas où des informations indiquant une acceptation sont reçues du second tiers, et l'utilisateur par qui la demande d'impression est réalisée est autorisé à imprimer la tâche au niveau d'un emplacement indiqué par les informations d'emplacement reçues, transmettre par la deuxième unité de transmission (130) la tâche à l'appareil de sortie d'image au niveau de l'emplacement d'impression.
